# EUROPEAN PATENT APPLICATION

(11) **EP 2 216 365 A1**
(43) Date of publication of application: **11.08.2010**
(21) Application number: 10152188.8
(22) Date of filing: 29.01.2010
(51) Int. Cl.: C08L 23/00

(54) **Composite materials made using waste materials and methods of manufacturing such**

(30) Priority: 29.01.2009 GB 0901433; 23.07.2009 GB 0912807
(71) Applicant: Salvtech Ltd., Taunton Somerset TA1 4QN (GB)
(72) Inventor: Christmas, Peter, Taunton, Somerset TA1 4QN (GB)
(74) Representative: Walker, Ross Thomson

(57) **Abstract**

The present invention addresses the problems involved in the disposal of 'secondary waste' material from, in particular, the paper recycling industry. The present invention relates to the use of DIR with both virgin and/or recycled polymers (such as MWP's) in the manufacture of composite materials. These composite materials are suitable for use with modern extrusion and injection moulding technology to produce a wider variety of sustainable and 'greener' products with material properties that are comparable to existing materials such as oriented strand board (OSB).

## Description

### Field of the Invention

The invention relates to the field of waste recycling. More specifically it relates to the use of secondary waste, produced from the Paper De-inking and Recycling process, in the production of composite materials with multiple practical applications.

### Background of the Invention

The use of paper is widespread. The resultant build-up of waste paper, paired with environmental concerns, has given rise to a huge industry devoted to the recycling of waste paper.

Using modern recycling and de-inking processes, a high percentage of waste paper can be reclaimed in the form of reusable fibre for papermaking. However, a not inconsiderable amount of material (typically between 25% and 40%) is rejected as waste material from these recycling and de-inking processes.

One of these so called 'secondary waste' materials is de-inking residue (DIR). DIR comprises: ink, clay, chalk and many short, low quality fibres that are unsuitable for papermaking. DIR is 'washed' from the waste paper during the recycling process and represents a major disposal problem for the industry. In the case of 'white' paper recycling processes, the removal of ink is a prime objective to enable the re-use of the longer cellulose fibres to make recycled newsprint, tissue and printing and writing papers.

Generally DIR takes the form of a sludge or 'cake-like' material, and, together with other types of 'secondary waste' material generated by the recycling process, is disposed of by incineration, land spreading or landfill.

UK Patent No. 2395162 provides a positive use for DIR as a binding agent in the manufacture of moulded products with many practical applications.

Another type of 'secondary waste' produced by the paper recycling process are mixed waste plastics (MWP's). Although other sources of mixed waste plastics include supermarkets, sorted council household collections and 'Black sack' collections, and sorted general industry waste.

MWP obtained from paper recyling usually contains a high percentage of lightweight mixed waste plastic (LMWP). Like DIR these waste materials present a major disposal problem for the industry and are generally disposed of in landfill or by incineration.

Recyling MWP's is very difficult, in particular because of the incompatibility of the different polymers, the danger of degradation of some polymers (such as PVC), and also due to their different melting points. A currently used method of recycling MWP involves reprocessing at lower temperatures (around 130°C) so that the plastics with high melting points act as solid fillers for the recycled product. However, the mechanical properties of the products produced are generally inferior and their surface properties can be poor.

### Summary of the Invention

The present invention addresses the problems involved in the disposal of 'secondary waste' material from, in particular, the paper recycling industry. The present invention relates to the use of DIR with both virgin and/or recycled polymers (such as MWP's) in the manufacture of composite materials. These composite materials are suitable for use with modern extrusion and injection moulding technology to produce a wider variety of sustainable and 'greener' products with material properties that are comparable to existing materials such as oriented strand board (OSB).

The present invention provides a composite material comprising at least one polymer material and a filler material, **characterized in that** the filler material is a de-inking residue (DIR) with moisture content of 8% or below.

Preferably the composite material may comprise between 10 and 80% DIR. More preferably the composite material may comprise between 15 and 65% DIR.

Preferably the polymer material is selected from virgin plastics and recycled plastics. The virgin plastics may be low density polyethylenes (LLDPE & LOPE), high density polyethylene (HDP), polypropylene (PP), polyvinylchloride (PVC) or combinations thereof.

The recycled plastics may be mixed waste plastics (MWP's) comprising lightweight mixed waste plastics (LMWP's) selected from low density polyethylene (LLDPE), high density polyethylene (HDP), polypropylene (PP), polyvinylchloride (PVC), and small amounts of other plastics.

Moisture content of 8% or below is considered suitable to produce composite materials suitable for extrusion moulding. However for injection moulding lower moisture contents perform better. Preferably the moisture content of the DIR is 2% or below.

It is appreciated that the composite material may further comprise additional chemical additives which affect the colour, flow properties, strength, water resistance and/or fire resistance of the final composite material.

A particularly effective composite mixture comprises 35% DIR and 65% virgin plastic material. Another particularly effective composite mixture comprises 50% DIR and 50% MWP's. Preferably, in the event that chemical additives are added to the composite material, the mixture maintains a ratio of 35:65 of DIR to virgin plastic or a ratio of 50:50 of DIR to MWP's.

Another aspect of the present invention is a method of producing a composite material using de-inking residue (DIR) as a filler material, comprising: processing the DIR to produce particles of DIR; drying the DIR to reduce the moisture content thereof to 8% or below; mixing the DIR particles with particles of a polymer material; and moulding the mixture of particles to produce a composite material.

Preferably the required DIR particles are produced by granulation and/or micronisation followed by a drying process. Preferably the DIR particles have a diameter of 2mm or less. Preferably the polymer particles have a diameter of 5mm or less. These particle sizes ensure the DIR and polymer material mix effectively:

Preferably the method may further comprise removing any ferrous and non-ferrous metals from the DIR before it is mixed with the polymer material.

Preferably the DIR/polymer mixture and/or the composite material may be dried to reduce the moisture content thereof. It will be understood that the further drying to reduce moisture content may be necessary in order to achieve better results using the composite material in injection moulding, for example.

It is appreciated that the moulding process may be carried out using extrusion moulding or injection moulding to produce a moulded product. Alternatively the moulding process may involve pelletizing the composite material for subsequent use as a feedstock in extrusion moulding or injection moulding. Such pelletized material may then be further processed (i.e. dried) to reach a moisture content that suits the type of moulding the pellets will be used in.

Preferably the polymer material is selected from virgin plastic, recycled plastics or combinations thereof.

It is appreciated that one or more additives may be added to the mixture to enhance the processing qualities of the mixture and/or the end properties of the composite material. Although the skilled person will appreciate what qualities are desirable, examples include: colour, flow properties, strength, water resistance and/or fire resistance.

Preferably the polymer material may be mixed waste plastic (MWP). The MWP used in the mixture may be pre-processed using the following steps: passing the MWP through a dry separator and then shredding the MWP; and processing the MWP to produce particles of MWP.

Preferably the pre-processing may further comprise removing metallic and non-metallic impurities from the MWP. Other non-metallic impurities may be removed by washing the MWP or passing it through an Atritor Air Separator.

Preferably the MWP particles produced by the pre-processing are formed by shredding and then granulating the MWP, preferably through a screen of 10mm or below. Preferably the MWP particles are about 5mm in diameter.

Preferably the MWP particles may be dried to reduce the moisture content thereof to 8% or below.

Alternatively the polymer material may be PVC.

The present invention also provides for the use of DIR with a moisture content of 8% or below as a filler material for composite materials.

### Brief Description of the Drawings

The present invention will be described with reference to the drawings, wherein:
Figure 1 shows comparative results for Charpy Impact testing;
Figure 2 shows comparative results for flexure modulus; and
Figure 3 shows comparative results for tensile modulus.

### Detained Description of the Invention

De-inking residue (DIR) is the washings from the paper de-inking and recycling process, which is used to produce recycled paper for re-use in making newsprint, tissue and fine writing papers. DIR consists of small unwanted cellulose fibres and a mixture of high quality fillers (mostly Calcium Carbonate and Talc and TiO₂). The majority of DIR waste is currently land spread as a soil conditioner (twice annually, between farming crops), but in the near future it will only be possible to dispose of such waste in landfill.

The inventor has discovered that DIR is inherently similar in make-up to the typical chemical additive 'suites' that are added to virgin polymers (and more recently to recycled polymers) to alter their end properties for an extrusion or injection moulding process.

With a composition of approximately 60% filler content and 40% organic cellulose, DIR, when added to a polymers, fulfills the role of an almost perfect masterbatch additive suite for a typical wood-plastic composite. The advantage of DIR over the typical chemical additives currently used is the easy availability and low cost of DIR. Further there is the additional benefit of using a recycled ingredient, which would otherwise have to be disposed of, rather than virgin ingredients.

The ratio of DIR to the polymer material determines the flexibility of the composite material. DIR contents of 50% and above produce a more rigid product, whilst a DIR content of less than 50% produces a more flexible product. By varying the ratio of DIR to polymer material it is possible to produce a composite material with the desired material properties. All percentage values are calculated on a dry weight basis. It should be noted that the terms plastic and polymer are used interchangeably throughout the whole of this document.

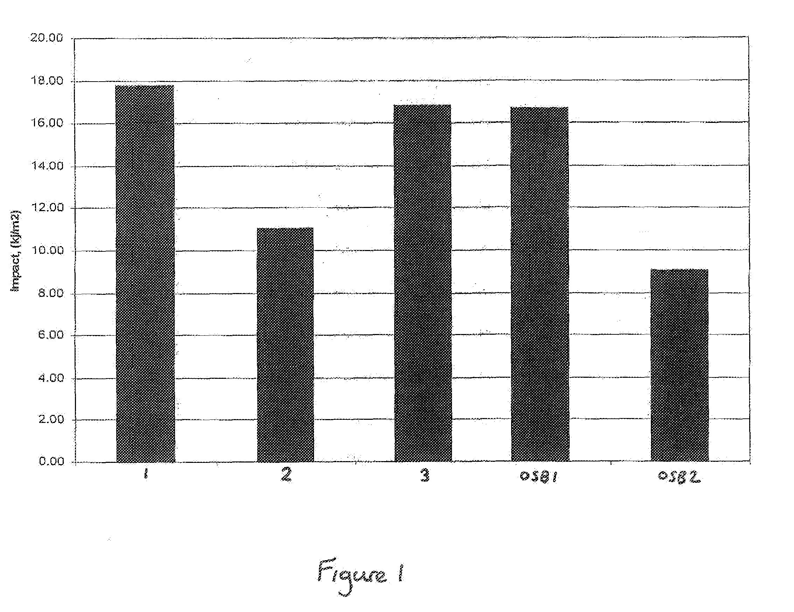

As mentioned above, the ratio of DIR to polymer material can be varied to produce a composite material with a desired flexibility. The higher the DIR content relative to the polymer material content the more rigid the composite material produced by the method. The lower the DIR content relative to the polymer material content the more flexible the composite material produced by the method. The range of properties that can be achieved by varying the composition of the mixture is demonstrated in the graphs of figures 1-3. Preferably the DIR and polymer material particles are mixed through a gravimetric mixer to ensure that the desired proportions of DIR and polymer material are present in the mixture.

In a first embodiment of the present invention DIR can be added to virgin polymers, either separately or mixed, in a variety of combinations to produce environmentally acceptable and sustainable Wood-plastic composite (WPC) type materials for use in construction and packaging applications. The virgin polymers can be low density polyethylene (LDP's), high density polyethylene (HDP's), polypropylene (PP), or polyvinyl chlorides (PVC's), or mixtures of the above.

It is believed that the combination of cellulose and Calcium Carbonate fillers in the DIR act as 'organic extenders' and 'inorganic fillers', combining with the polymers to provide flexible, cheaper and recyclable materials suitable for a wide range of modern construction, building and packaging products. Such products can be moulded with a variety of processes, in particular extrusion and injection moulding processes.

In particular this applies to a method whereby the DIR is mixed with various grades of PVC polymer. The DIR is prepared in its micronized form, dried to around 2% moisture or below, and mixed with any grade of 'rigid' and/or 'soft' PVC in powdered form in standard modern mixers/blenders to form a fine powder. Suitable additives can be added to the mix to achieve or enhance any required 'end properties' and processing qualities of the compounds, such as modifiers, emulsifiers and compatibalizers, fire retardants and waterproofing agents, anti-oxidizing and anti-aging agents, and odour influencing agents. These mixtures are then able to be processed through most modern standard PVC extrusion and injection moulding processes. Alternatively the above mixture can be compounded through an extruder into 'beads'. These 'beads' can then be supplied to PVC extruders/manufacturers, or PVC injection moulders, as raw material stock for their existing operations.

In a second embodiment of the present invention DIR can be added to waste plastics such as MWP, either separately or mixed, in a variety of combinations to produce environmentally acceptable and sustainable Woodplastic composite type materials for a wide variety of products. A suitable source of waste plastics could be any recycled grade of plastic from a municipal or other similar re-cycling facility.

Generally the MWP used in the method of the present invention are preferably lightweight mixed waste plastics (LMWP). Such LMWP can be obtained from the paper de-inking and recycling process and/or from the recycling of old corrugated cardboard. Further, a substantial amount of domestic waste, such as packaging and the like, is made up of MWP. After processing through traditional separating units, such as municipal recyling facilities (MURFS), or composting units such as anaerobic digestion (AD) plants there is a residue of LWMP's that cannot yet be easily recycled and is currently landfilled or incinerated. These are examples of sources of the MWP that is used in the present invention and it is appreciated that other viable sources of MWP exist.

Mixed waste plastics (MWP) can be extracted from the waste paper in the paper recycling and de-inking processes. In particular this extraction occurs in the pulping process. Mixed waste plastics from this source are made up of approximately 85% LLDPE, low density polyethylene, (film type plastics) and 10% HDP, high density polyethylene, (cups, bottles and hard covers) and the rest is 3% PVC and 2% mixed 'other' types of plastics.

The inventor has found that almost any combination of waste plastics, as long as it is reasonably consistent in its make up of polymer types, can form a useful compounded base material when mixed with DIR. The more variable the mix of the plastics however then the higher the percentage of DIR is required to even out variability in the final product.

The method of the second embodiment of the present invention takes two main ingredients, in the form of de-inking residue (DIR) and mixed waste plastic (MWP), and subjects them to a number of processes before mixing them together to form a powder, or a flake, or by densifying them to form a pellet. In any of these forms the mixture can be used as 'feedstock' by the modern practiced extrusion companies to be extruded directly into products using suitable dies and 'downstream' equipment.

Alternatively, the 'feedstock' can be compounded through a suitable extruder or compounder to produce 'beads' of the composite material. These 'beads' can be sold as feed stock for use by almost any extrusion or injection moulding company who are using suitable adapted modern equipment known to the practiced manufacturer.

These 'beads' act as the raw material for extrusion or injection moulding processes where they are turned into a variety of products such as plastic pallets, tubes and plastic wood type applications, fencing and decking and as a replacement material for PVC in window frames manufacture. Alterations are required to customize the injection moulding (IM) equipment and also the extruders, but the skilled person will appreciate the necessary adaptations required.

DIR, which is a direct waste product of paper recycling, generally takes the form of a cake with a moisture content of between 40% and 55%. Before the DIR can be combined with the polymer material (whether virgin or recycled) it must be processed into small round particles, this helps improve the mixing with the polymer material. These DIR particles can be produced by various means, although granulation and micronisation are preferred by the inventor. The particles must be of a size which is suitable to enable the mixing of the DIR with the polymers particle. It is appreciated that particles with a diameter of 2mm or below would be suitable. The DIR must be dried to reduce the moisture content to 8% or below.

MWP, which it will be appreciated can be sourced from a variety of waste types, usually takes the form of relatively large strips of dirty shredded film and other scrap. This MWP waste from these sources usually has a moisture content of up to 35% and requires drying before mixing with DIR.

Before MWP can be combined with the DIR particles it must also be processed to separate out the non-plastic materials. This separation is usually done by a combination of dry separation, magnetic separation, and washing, although not all processes are necessarily used for each batch of MWP. The MWP is also subjected to a coarse shredder to reduce the size of the MWP pieces. Following shredding, the MWP is granulated, preferably using at least a 10mm screen, to produce MWP in a form small enough for good mixing with the DIR particles. It is appreciated that MWP particles with a diameter of about 5mm or below would be suitable.

The desired proportions of DIR and MWP particles are then mixed together using a gravimetric mixer, which enables controlled proportioning of the ingredients. As already discussed above, the proportion of DIR to polymer material determines the nature of the composite material produced by the combination,

The mixture of DIR and MWP is passed through a standard pellet machine to make the composite material pellets. The friction caused by the action of the screws within the pellet making machine has been found to be useful in the mixing of the DIR and MWP to form the pellets of composite material, although the temperature must be controlled to avoid the disadvantages mentioned below.

These pellets are then dried in a standard pellet drier to a moisture content of 8% or lower. Moisture contents of below 8% are more preferable for extrusion applications and below 2% for injection moulding applications due to the effect of water, driven off during the production of the pellets, on the mixing of the composite material and the structural strength thereof.

As discussed above, MWP is difficult to process and accommodate in processing. Over-heating of MWP can lead to the emission of unpleasant odours and can also lead to degradation in the structural properties of the materials produced. The method of the present invention utilizes low temperatures of below 190°C to ensure that these problems are avoided. A range of plastic polymers are un-melted at this temperature and instead are bound into the matrix by the easily melted LLDPE, which usually represent a high proportion (about 85%) of the overall MWP.

Mixing MWP with the DIR actuary works to produce a mechanically improved product ranging from a flexible plastic product to a hard Bakelite product. The more DIR present the more rigid the product. For a flexible composite product a mixture of 10% DIR and 90% MWP is appropriate. However for a more rigid PVC or Bakelite type product a mixture of 50% DIR and 50% MWP is more suitable. In the case of low DIR content mixtures a coloring dye may be added to achieve a desired colour finish. In the case of the 50:50 mix then less dye is generally required, and a black colour is achieved naturally, However an emulsifier additive may be required to improve the flow properties of such a 50:50 mixture.

MWP is also available from the recycling of OCC (Old Corrugated Cardboard). Waste from the initial pulping and cleaning process carried out during the recycling of cardboard are substantial (approx. 750k tones/year in the UK alone) and are currently either burnt for energy or sent to landfill. This OCC waste (Kraft Pulper rejects - KPR's) comprises around 70% brown cellulose fibre and 30% mixed plastics.

By carrying out an initial dry separation through an Atritor Turbo-Separato^{™} it has been possible to separate the majority of the fibre present in the OCC waste (KPR's) to produce a mix, comprising 15% to 20% brown fibre and 80% mixed plastics. This mix is very similar to the composition of LMWP obtainable from the paper recycling mentioned above.

Alternatively mixed waste plastics can be added to the original KPR's to obtain a balance 80% MWP's to 20% brown kraft fibre.

If then a further addition of the DIR is added (e.g. up to 20%) to this mix then the mix can be compounded as above to give pellets/beads for onward processing as above and a further range of materials can be produced.

This type of 'brown' or 'kraft fibre' compound offers longer fibres with lignin still present in the cellulose. These longer fibres provide more strength and flexibility to the final products after Extrusion or Injection Moulding.

Alternatively, when the 'black sack' collections from local council have been processed through Biomass MURK (mixed urban refuse facility) and the organic fraction extracted for decomposing to generate gas, the inorganic fractions left are cleaned and separated for separate disposal. Whilst most of the plastic bottles, etc can be disposed using established processes, there remains a substantial plastic fraction very similar to the LMWP mentioned above that so far has defied useful recycling and is currently sent to landfill. Such LMWP can be successfully mixed with DIR to produce useful pellets/beads for onward processing.

### Examples

In order to determines the material properties of composite materials made according to the present invention a range of comparative tests were carried out.

Three different mixtures of plastic with moisture content <8% and De-inking residue (DIR) with moisture content <8% were mixed to form composite materials. The composite materials were then extrusion moulded.

The moulded products and two samples of Oriented Strand Board (OSB) were subjected to Charpy impact testing, flexure modulus testing and tensile modulus testing.

The materials tested were;

| Name | Composition |
|---|---|
| 1 | 75% plastic; 25% DIR |
| 2 | 25% plastic; 75% DIR |
| 3 | 50% plastic; 50% DIR |
| OSB1 | Kingspan^{™} Oriented Strand Board |
| OSB2 | Space 4^{™} Oriented Strand Board |

Figure 1 shows the test results from the Charpy Impact testing. The results of Figure 1 show that both composite material 1 and 3 out-performed both OSB samples in the impact testing. Composite material 2 out-performed OSB2,

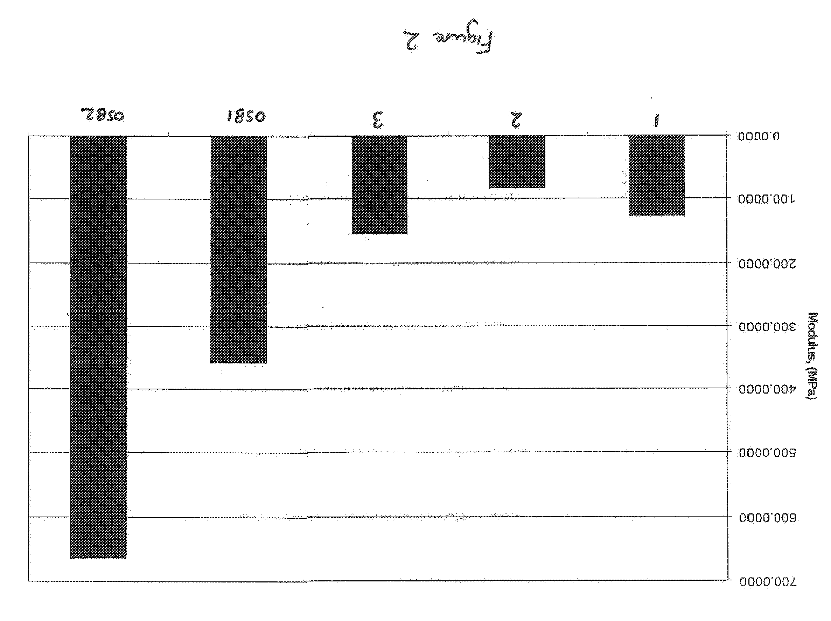

Figure 2 shows the test results from flexure modulus testing.

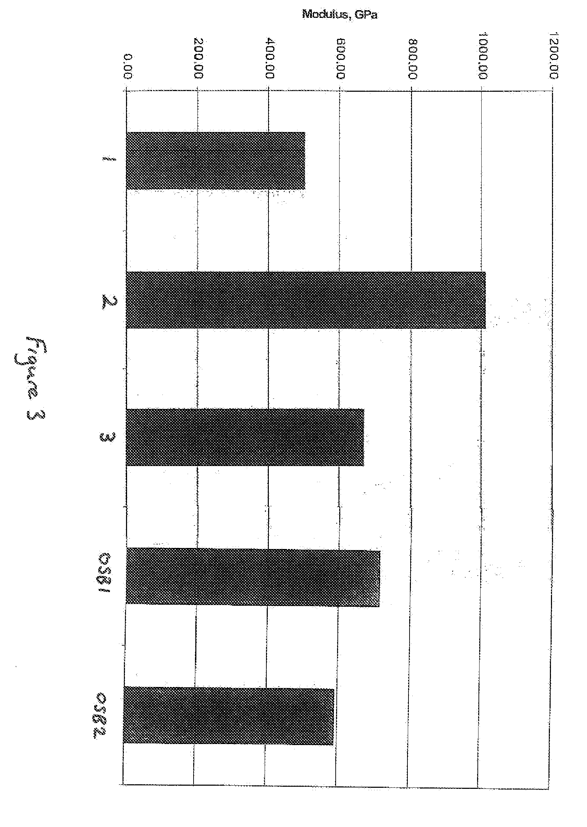

Figure 3 shows the test results from tensile modulus testing. The results of Figure 3 show that, although composite materials 1 and 3 shared similar tensile strength to the OSB samples, composite material 2 out-performed both OSB samples.

These figures serve to demonstrate the potential for replacing existing chipboard or OSB material with the new composite materials.

## Claims

1. A composite material comprising at least one polymer material and a filler material, **characterized in that** the filler material is a de-inking residue (DIR) with moisture content of 8% or below.

2. The material of claim 1, wherein between 10 and 80%, and preferably between 15 and 65%, of the dry weight of the composite material is DIR.

3. The material of any of the preceding claims, wherein the at least one polymer material is selected from virgin plastics, such as low density polyethylenes (LLDPE & LDPE), high density polyethylene (HDP), Polypropylene (PP), Polyvinylchloride (PVC) or combinations thereof, and recycled plastics, such as mixed waste plastics (MWP's) comprising lightweight mixed waste plastics (LMWP's) selected from low density polyethylene (LLDPE), high density polyethylene (HDP), Polypropylene (PP), Polyvinylchloride (PVC), and small amounts of other plastics.

4. The material of any of the preceding claims, wherein the moisture content of the DIR is 2% or below.

5. The material of any of the preceding claims, further comprising additional chemical additives which affect the colour, flow properties, strength, water resistance and/or fire resistance of the final composite material.

6. The material of any of the preceding claims, comprising 35% DIR and 65% virgin plastic material,

7. The material of any of claims 1 to 5, comprising 50% DIR and 50% MWP's.

8. A method of producing a composite material using de-inking residue (DIR) as a filler material, comprising:
processing the DIR to produce particles of DIR;
drying the DIR to reduce the moisture content thereof to 8% or below;
mixing the DIR particles with particles of a polymer material; and
moulding the mixture of particles to produce a composite material.

9. The method of claim 8, wherein the mixture and/or the composite material is dried to reduce the moisture content thereof.

10. The method of any of claim 8 or 9, wherein the polymer material is selected from virgin plastic, preferably PVC, recycled plastic, preferably mixed waste plastic (MWP), or combinations thereof.

11. The method of claim 10, wherein the MWP used in the mixture is pre-processed using the following steps:
passing the MWP through a dry separator and then shredding the MWP; and
processing the MWP to produce particles of MWP.

12. The method of claim 1, wherein the MWP particles are produced by shredding and then granulating the MWP, preferably through a screen of 10mm or below.

13. The method of claim 1 or 12, wherein the MWP particles are dried to reduce the moisture content thereof to 8% or below.

14. The method of any of claims 8 to 13, wherein the DIR particles have a diameter of 2mm or less.

15. The method of any of claims 8 to 14, wherein the polymer particles have a diameter of 5mm or less.
